# EUROPÄISCHE PATENTSCHRIFT

(11) **EP 0 701 201 B1**
(45) Veröffentlichungstag und Bekanntmachung des Hinweises auf die Patenterteilung: **18.10.2000**
(21) Anmeldenummer: 95113123.4
(22) Anmeldetag: 21.08.1995
(51) Int. Cl.: G06F 9/44

(54) **Verfahren zur Verwaltung dynamischer Objekte in einer objektorientiert programmierten Einrichtung**
Dynamic object management method for a device which is programmed in an object orientated manner
Méthode pour gérer des objets dynamiques dans un appareil programmé d'une manière orientée objet

(30) Priorität: 31.08.1994 DE 4430994
(43) Veröffentlichungstag der Anmeldung: 13.03.1996
(73) Patentinhaber: SIEMENS AKTIENGESELLSCHAFT, 80333 München (DE)
(72) Erfinder: Stöckl, Werner, Dr. Phil., D-82065 Baierbrunn (DE); Tietsch, Michael, Dipl.-Ing., D-86916 Kaufering (DE)

(56) Entgegenhaltungen:
- EP-A- 0 405 829
- GB-A- 2 266 172

## Beschreibung

Die Erfindung betrifft ein Verfahren zur Verwaltung dynamischer Objekte in einer objektorientiert programmierten Einrichtung, in der statische und dynamische Objekte instanziierbar und die dynamischen Objekte löschbar sind, wobei gleichartige Objekte einer Klasse zuordenbar sind.

In Informationstechnik IT34 (1992) 2, "Objektorientierte Softwareentwicklung", H. Becker, Siemens AG sind wesentliche Eigenschaften der objektorientierten Programmierung beschrieben. Hierbei stellt ein Objekt ein abgegrenztes Programm mit eindeutig definierten Funktionen bzw. Methoden und Eigenschaften dar. Gleichartige Objekte, d.h. Objekte mit gleichen Funktionen bzw. Methoden und Eigenschaften, werden in Form einer Klassenbeschreibung beschrieben, d.h. einer Klasse zugeordnet. Innerhalb derartiger Klassen sind statische oder dynamische Objekte instanziierbar, wobei statische Objekte permanent im System vorhanden sind und dynamische Objekte während eines Programmablaufs instanziierbar und wieder löschbar sind. Das Instanziieren und Löschen von dynamischen Objekten wird durch einen Anreiz aus einem den Objekten übergeordneten Prozeß oder durch einen anderes dynamisches oder statisches Objekt - insbesondere beim Auf- und Abbau von Objektketten - eingeleitet. Bei einem Einsatz von objektorientierten Programmen in Kommunikationseinrichtungen, insbesondere in Vermittlungsanlagen, werden im Rahmen eines Verbindungsauf- und -abbaus zwischen an die Vermittlungsanlage angeschlossenen Kommunikationseinrichtungen laufend dynamische Objekte bzw. verkettete dynamische Objekte instanziiert und anschließend gelöscht. Bei einer durch mehrere dynamische Objekte aufgebauten Verbindung treten Fälle auf, bei denen dynamische Objekte annähernd gleichzeitig von beiden Seiten einer Verbindung gelöscht werden - beispielsweise bei einem annähernd gleichzeitigen Abbau der Verbindung durch die beiden Kommunikationsendgeräte. Dies bedeutet beispielsweise bei einer Kette von dynamischen Objekten bei einer aufgebauten Verbindung zwischen zwei Kommunikationsendgeräten, daß Objekte dieser Kette gelöscht werden, ohne daß die anderen davon Kenntnis erhalten. Versucht nun ein dynamisches Objekt ein anderes, gelöschtes dynamisches Objekt anzusprechen, führt dies zu Kollisionsfällen, die letztlich den Absturz des Systems bzw. der Kommunikationseinrichtung zur Folge haben.

Die der Erfindung zugrundeliegende Aufgabe besteht darin, die Kollisionsfälle zwischen dynamischen Objekten und gelöschten dynamischen Objekten zu vermeiden. Die Aufgabe wird ausgehend von einer objektorientiert programmierten Einrichtung gemäß den Merkmalen des Oberbegriffs des Patentanspruchs 1 durch dessen kennzeichnende Merkmale gelöst.

Die wesentlichen Aspekte des erfindungsgemäßen Verfahrens sind darin zu sehen, daß für jede gleichartige Objekte umfassende Klasse von dynamischen Objekten ein statisch instanziierter Objektmanager vorgesehen ist und daß eine Instanziierung eines dynamischen Objektes mit Hilfe des jeweiligen Objektmanagers veranlaßt wird, wobei im jeweiligen Objektmanager für jedes dynamische Objekt eine das jeweilige instanziierte dynamische Objekt identifizierende, logische Objektreferenz gebildet und gespeichert wird sowie eine Löschung eines dynamischen Objektes mit Hilfe des jeweiligen Objektmanagers veranlaßt wird, wobei die im jeweiligen Objektmanager zugeordnete logische Objektreferenz gelöscht wird. Die dynamischen Objekte werden mit Hilfe der logischen Objektreferenz jeweils über den zugeordneten Objektmanager aufgerufen. Der zu einer Klasse, d.h. einem Typ von gleichartigen dynamischen Objekten hinzugefügte Objektmanager stellt eine zusätzliche Instanz dar, in der Kenntnisse über instanziierte und gelöschte dynamische Objekte vorliegen. Da die dynamischen Objekte mit Hilfe dieser zusätzlichen Instanz aufgerufen werden - z.B. bei einem Informationsaustausch zwischen dynamischen Objekten - können Kollisionen hinsichtlich des Aufrufs von gelöschten, dynamischen Objekten vermieden werden.

Die logische Objektreferenz ist vorteilhaft durch eine den jeweiligen Objektmanager bestimmende Manager- Identifikation und durch eine das jeweilige Objekt bestimmende Objekt- Identifikation gebildet, wobei bei einer Einrichtung mit Mehrprozeßbetrieb zu der Manager- und Objekt- Identifikation eine Prozeß- Identifikation hinzufügbar ist - Anspruch 2. Hierbei ist die Manager- Identifikation innerhalb eines Prozesses eindeutig, statisch und die Objekt- Identifikation innerhalb einer Klasse eindeutig, dynamisch vom zuständigen Objektmanager vergeben. Eine Prozeßidentifikation ist einmal im System statisch vergeben.

Bei einer vorteilhaften Kommunikations- Verkettung eines die Instanziierung eines weiteren dynamischen Objektes veranlassenden dynamischen Objektes und des weiteren instanziierten dynamischen Objektes wird die bei der Instanziierung gebildete logische Objektreferenz über den jeweiligen Objektmanager an das die Instanziierung veranlassende dynamische Objekt und die logische Objektreferenz des die Instanziierung veranlassenden dynamischen Objektes über den jeweiligen Objektmanager an das weitere instanziierte dynamische Objekt übermittelt - Anspruch 3. Eine derartige Verkettung wird bei einer Instanziierung eines dynamischen Objektes durch ein anderes dynamisches Objekt durchgeführt. Alternativ sind vom übergeordneten Prozeß weitere Verkettungen eines dynamischen Objektes mit einem anderen dynamischen Objekt möglich, wobei die jeweilige logische Objektreferenz den betroffenen dynamischen Objekten mitgeteilt wird. Mit Hilfe dieser logischen Objektreferenzen werden die jeweiligen dynamischen Objekte aufgerufen.

Hierbei wird dem instanziierten Objekt eine logische Identifizierung zugeordnet und diese dem die Instanziierung veranlassenden Objekt mitgeteilt, worauf die logische Objektreferenz des die Instanziierung veranlassenden Objektes an das instanziierte Objekt übertragen wird und bei einer Kommunikation zwischen den instanziierten dynamischen Objekten werden die Objekte mit Hilfe dieser logischen Objektreferenz aufgerufen. Im Objektmanager einer Klasse von Objekten sind sowohl die instanziierten als auch die gelöschten Objekte bekannt und bei einem Aufruf eines gelöschten dynamischen Objektes durch ein anderes Objekt wird diese Löschung dem anderen dynamischen Objekt mitgeteilt. Ein weiterer wesentlicher Vorteil des erfindungsgemäßen Objektmanagers ist darin zu sehen, daß dieser auch beim Informationsaustausch zwischen den dynamischen Objekten verwendbar ist und zu einer Erhöhung der Adressierungssicherheit zwischen den dynamischen Objekten führt.

Besonders vorteilhaft ist die Einrichtung durch eine Kommunikationseinrichtung, insbesondere eine prozessorgesteuerte Telekommunikationsanlage repräsentiert - Anspruch 10. In Telekommunikationsanlagen sind im Rahmen eins Verbindungsauf- und -abbaus Ketten von dynamischen Objekten instanziier- und löschbar ohne daß die eingangs erläuterten Kollisionen bezüglich des Aufrufs von bereits gelöschten dynamischen Objekten auftreten. Dies bedeutet ein erheblich sicheres, d.h. störungsfreies Betreiben von insbesondere Telekommunikationsanlagen.

Weitere vorteilhafte Ausgestaltungen insbesondere hinsichtlich des Informationsaustausches zwischen dynamischen Objekten sind den Unteransprüchen zu entnehmen.

Im folgenden wird das erfindungsgemäße Verfahren anhand von drei Zeichnungen näher erläutert. Dabei zeigen
- FIG 1: eine Kette von instanziierten dynamischen Objekten,
- FIG 2: eine Instanziierung eines dynamischen Objektes durch ein anderes dynamisches Objekt und
- FIG 3: den Informationsaustausch zwischen zwei verketteten dynamischen Objekten.

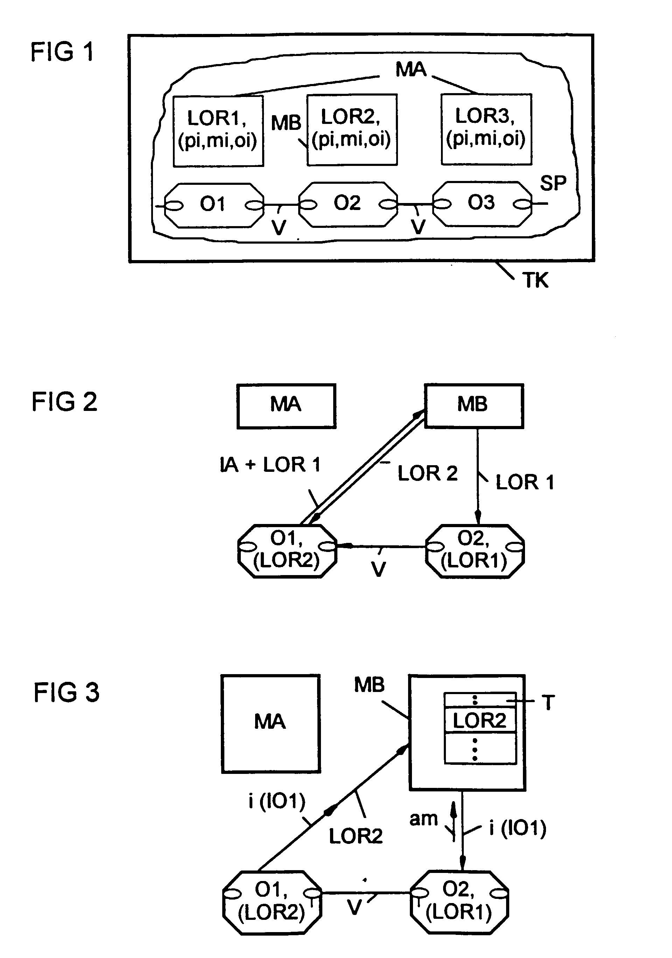

FIG 1 zeigt teilweise einen Speicher SP einer Telekommunikationsanlage TK, in dem im Rahmen eines Verbindungsaufbaus zwischen zwei angeschlossenen Kommunikationsendgeräten - nicht dargestellt - drei dynamische Objekte O1..O3 instanziiert sind. Die Anzahl der instanziierten dynamischen Objekte O1..3 ist beispielhaft bestimmt, wobei üblicherweise fünf oder mehr dynamische Objekte instanziiert werden.

Für das Ausführungsbeispiel sei angenommen, daß das erste und dritte dynamische Objekt O1, O3 gleichartige dynamische Objekte darstellen und folglich diesen beiden dynamischen Objekten O1, O3 ein statisch instanziierter Objektmanager MA vom Typ A zugeordnet ist. Die in FIG 1 dargestellten beiden Rechtecke mit der Bezeichnung MA repräsentieren zusammen den Objektmanager MA und sollen andeuten, daß dieser Objektmanager MA das erste und dritte dynamische Objekt O1, O3 verwaltet.

Das zweite dynamische Objekt O2 gehört einem anderen Typ - im Ausführungsbeispiel Typ B - von dynamischen Objekten an. Folglich ist diesem und weiteren nicht dargestellten dynamischen Objekten vom Typ B ein Objektmanager MB vom Typ B zugeordnet. Durch die Verbindungen V zwischen den drei dynamischen Objekten O1..O3 ist eine Verkettung angedeutet, die anhand von FIG 2 näher erläutert wird.

In den beiden Objektmanagern MA, MB ist für jedes zugehörige, instanziierte dynamische Objekt O1..3 eine logische Objektreferenz LOR1..3 gespeichert. Eine gespeicherte logische Objektreferenz LOR1..3 bedeutet, daß ein dynamisches Objekt O1..3 des jeweiligen Typs im Speicher SP instanziiert ist. Zur eindeutigen Identifizierung ist eine logische Objektreferenz LOR1..3 zumindest durch eine Manager- Identifikation mi und durch eine Objekt- Identifikation oi gebildet. Eine Manager- Identifikation mi ist durch eine Speicheradresse oder durch Speicherbereichsadressen repräsentiert - nicht dargestellt -, durch die der Beginn des jeweiligen Objektmanagerprogramms im Speicher SP oder der Speicherbereich bestimmt ist, in dem das jeweilige Objektmanagerprogramm gespeichert ist. Der jeweilige Objektmanager O1..3 wird mit Hilfe der Speicher- oder Speicherbereichsadressen aufgerufen. Analog hierzu ist die Objekt- Identifikation oi durch eine Speicheradresse oder durch Speicherbereichsadressen repräsentiert, mit deren Hilfe das jeweilige dynamische Objekt O1..3 durch den jeweiligen Objektmanager O1..3 aufgerufen wird. Die Prozeß- Identifikation pi ist bei Mehrprozeß- Betrieb vorgesehen und ist ebenfalls durch eine das jeweilige, einen Prozeß realisierendes Programm im Speicher SP identifizierende Speicheradresse oder Speicherbereichsadressen repräsentiert.

In FIG 2 ist beispielhaft sowohl die Instanziierung als auch die Verkettung des zweiten dynamischen Objektes gemäß FIG 1 durch bzw. mit dem ersten dynamischen Objekt O1 gemäß FIG 1 beschrieben. Für das Ausführungsbeispiel sei angenommen, daß das erste dynamische Objekt O1 durch einen übergeordneten Prozeß - nicht dargestellt - der Telekommunikationsanlage TK bereits instanziiert und dem Objektmanager MA gemäß FIG 1 zugeordnet ist.

Die Instanziierung des zweiten dynamischen Objektes O2 wird durch Übermitteln einer Initialisierungsaufforderung IA und der logischen Objektreferenz LOR1 des ersten dynamischen Objektes O1 an den durch die in der Objektreferenz LOR1 angegebene Manager- Identifikation mi bestimmten Objektmanager MB eingeleitet - für das Ausführungsbeispiel sei ein Objektmanager MB vom Typ B angenommen. Im Objektmanager MB wird nach Empfang der Instanziierungsaufforderung IA das zweite dynamische Objekt O2 instanziiert, wobei dieses zweite dynamische Objekt O2 ein dynamisches Objekt O2 vom Typ B darstellt. Bei der Instanziierung des zweiten dynamischen Objektes O2 wird für dieses durch den Objektmanager MB selbständig eine logische Objektreferenz LOR2 gebildet - einschließlich der Manager-, der Objekt- und ggfs. einer Prozeß- Identifikation pi, mi, oi - und im zugeordneten Objektmanager MB gespeichert.

Die Verkettung der beiden dynamischen Objekte O1, O2 wird dadurch bewirkt, daß vom Objektmanager MB die übermittelte logische Objektreferenz LOR1 an das zweite dynamische Objekt O2 und die bei der Instanziierung gebildete logische Objektreferenz LOR2 für das zweite dynamische Objekt O2 an das erste dynamische Objekt O2 übermittelt und in diesen gespeichert wird. Die gespeicherten logischen Objektreferenzen LOR1, LOR2 werden bei einem Informationsaustausch jeweils zum Aufruf des anderen dynamischen Objektes O1, O1 herangezogen. Die Verkettung der beiden dynamischen Objekte O1, O2 ist durch die Verbindung V angedeutet.

Anhand von FIG 3 wird ein Informationsaustausch zwischen dem ersten und dem zweiten dynamischen Objekt gemäß FIG 1 bzw. FIG 2 erläutert. Für das Ausführungsbeispiel sei angenommen, daß die in FIG 2 dargestellten dynamischen Objekte O1, O2 instanziiert sind und in den zugeordneten Objektmanagern MA, MB die jeweiligen logischen Objektreferenzen LOR1, LOR2 gespeichert sind. Für das Ausführungsbeispiel sei desweiteren angenommen, daß das erste dynamische Objekt O1 dem zweiten dynamischen Objekt O2 eine Information i bzw. ein Informationsobjekt IO übermitteln soll. Ein Informationsobjekt IO1 stellt ein von einem dynamischen Objekt O1..3 instanziiertes dynamisches Informationsobjekt IO1 dar, in dem zu übermittelnde Informationen i bzw. Daten hinterlegt sind.

Der Informationsaustausch zwischen dem ersten und dem zweiten dynamischen Objekt OR1, OR2 wird dadurch eingeleitet, daß vom ersten dynamischen Objekt O1 die logische Objektreferenz LOR2 des zweiten dynamischen Objektes O2 und anschließend die zu übermittelnden Informationen i oder sofern ein Informationspaket IO1 vorliegt, das gebildete dynamischen Informationsobjektes IO1 an den dem zweiten logischen Element O2 zugeordneten Objektmanager OB übermittelt wird. Die Variante mit einem dynamischen Informationsobjekt IO1 ist in FIG 3 durch eine durch Klammern abgegrenzte Bezeichnung angedeutet.

Im Objektmanager MB wird daraufhin überprüft, ob in einer Tabelle T eine zu der übermittelten gleichartige logische Objektreferenz LOR2 gespeichert ist. Bei positiven Prüfungsergebnissen, d.h. zumindest eine entsprechende logische Objektreferenz LOR2 ist gespeichert, werden die Informationen i bzw. das dynamische Informationsobjekt IO1 an das zweite dynamische Objekt O2 weitergeleitet und dort verarbeitet.

Wird bei der Überprüfung festgestellt, daß keine logische Objektreferenz LOR2 in der Tabelle T des Objektmanagers MB gespeichert ist, so werden die übermittelten Informationen i bzw. das Informationsobjekt IO1 verworfen. Zusätzlich kann dem den Informationsaustausch veranlassenden ersten dynamischen Objekt O1 eine Information, üblicherweise eine Fehlerinformation übermittelt werden, durch die das Fehlen einer logischen Objektreferenz LOR2 dem ersten dynamischen Objekt O1 angezeigt wird. Die logische Objektreferenz LOR2 ist nicht mehr in der Tabelle T des Objektmanagers MB gespeichert, sofern dieses beispielsweise durch ein anderes Objekt, z.B. das dritte dynamische Objekt O3 gemäß FIG 1 bereits gelöscht wurde. Eine Löschung kann auch durch den zugeordneten Prozeß durchgeführt worden sein.

Eine Löschung eines dynamischen Objektes O1..3 durch ein anderes dynamisches Objekt O1..3 oder durch einen übergeordneten Prozeß wird über den zugeordneten Objektmanager MA, MB veranlaßt. Hierbei wird von dem jeweiligen dynamischen Objekt im Rahmen des Informationsaustausches die vorgesehene Löschung dem zu löschenden dynamischen Objekt mitgeteilt und von dem zu löschenden dynamischen Objekt wird dem zugeordneten Objektmanager im Rahmen eines Meldungsaustausches mitgeteilt wird, daß es gelöscht werden soll. Die Löschung des jeweiligen dynamischen Objektes wird durch den zugeordneten Objektmanager veranlaßt, wobei bei einer Löschung des jeweiligen dynamischen Objektes die im zugeordneten Objektmanager gespeicherte, zugeordnete logische Objektreferenz gelöscht wird. In FIG 3 ist die Löschungsprozedur für beispielsweise das zweite dynamische Objektes O2 durch die Angabe einer Löschungsmeldung an angedeutet.

## Patentansprüche

1. Verfahren zur Verwaltung dynamischer Objekte in einer objektorientiert programmierten Einrichtung (TK), in der statische und dynamische Objekte (O1..3) durch einen übergeordneten Prozeß oder durch instanziierte dynamische Objekte (O1..3) instanziierbar und die dynamischen Objekte (O1..3) löschbar sind, wobei gleichartige Objekte (O1..3) einer Klasse zuordenbar sind,
**dadurch gekennzeichnet**,
- daß jeder gleichartige Objekte (O1..3) umfassenden Klasse von dynamischen Objekten (O1..3) ein statisch instanziierter Objektmanager (MA, MB) zugeordnet ist,
- daß eine Instanziierung eines dynamischen Objektes (O1..3) mit Hilfe des jeweiligen Objektmanagers (MA, MB) veranlaßt wird, wobei im jeweiligen Objektmanager (MA, MB) für jedes dynamische Objekt (O1..3) eine den zugeordneten Objektmanager (MA, MB) und das jeweilige instanziierte dynamische Objekt (O1..3) identifizierende, logische Objektreferenz (LOR1..3) gebildet und gespeichert wird,
- daß eine Löschung eines dynamischen Objektes (O1..3) mit Hilfe des jeweiligen Objektmanagers (MA, MB) veranlaßt wird, wobei die im jeweiligen Objektmanager (MA, MB) zugeordnete logische Objektreferenz (LOR1..3) gelöscht wird, und
- daß dynamische Objekte (O1..3) mit Hilfe der logischen Objektreferenz (LOR1..3) jeweils über den zugeordneten Objektmanager (MA, MB) aufgerufen werden.

2. Verfahren nach Anspruch 1,
**dadurch gekennzeichnet**,
- daß die logische Objektreferenz (LOR1..3)
- durch eine den jeweiligen Objektmanager (MA, MB) bestimmende Manager- Identifikation (mi), und
- durch eine das jeweilige Objekt (O1..3) bestimmende Objekt-Identifikation (oi) gebildet ist,
- wobei bei einer Einrichtung (TK) mit Mehrprozeßbetrieb der Manager- und Objekt- Identifikation (mi, oi) eine ProzeßIdentifikation (pi) hinzufügbar ist.

3. Verfahren nach Anspruch 1 oder 2,
**dadurch gekennzeichnet**,
- daß im Sinne einer Kommunikations- Verkettung eines die Instanziierung eines weiteren dynamischen Objektes (O2) veranlassenden dynamischen Objektes (O1) und des weiteren instanziierten dynamischen Objektes (O2)
- die bei der Instanziierung gebildete logische Objektreferenz (LOR2) über den jeweiligen Objektmanager (MB) an das die Instanziierung veranlassende dynamische Objekt (O1) und
- die logische Objektreferenz (LOR1) des die Instanziierung veranlassenden dynamischen Objektes (O1) über den jeweiligen Objektmanager (MB) an das weitere instanziierte dynamische Objekt (O2)
übermittelt wird.

4. Verfahren nach einem der Ansprüche 1 bis 3,
**dadurch gekennzeichnet**,
- daß bei einer vorgesehenen Löschung eines dynamischen Objektes (O1..3) durch ein anderes dynamisches Objekt (O1..3) oder durch einen übergeordneten Prozeß von dem jeweiligen dynamischen Objekt (O1..3) bzw. dem übergeordneten Prozeß im Rahmen des Informationsaustausches die vorgesehene Löschung dem zu löschenden dynamischen Objekt (O1..3) mitgeteilt wird, daß von dem zu löschenden dynamischen Objekt (O1..3) dem zugeordneten Objektmanager MA, MB im Rahmen eines Meldungsaustausches mitgeteilt wird, daß es gelöscht werden soll, und daß die Löschung des jeweiligen dynamischen Objektes (O1..3) durch den zugeordneten Objektmanager (MA, MB) veranlaßt wird,
- wobei bei einer Löschung des jeweiligen dynamischen Objektes (O1..3) die im zugeordneten Objektmanager (MA, MB) gespeicherte, zugeordnete logische Objektreferenz (LOR1..3) gelöscht wird.

5. Verfahren nach einem der Ansprüche 2 bis 5,
**dadurch gekennzeichnet**,
- daß bei einem Informationsaustausch zwischen verketteten dynamischen Objekten (O1, O2) das den Informationsaustausch veranlassende dynamische Objekt (O1) die logische Objektreferenz (LOR2) des weiteren dynamischen Objektes (O2) an den zugeordneten Objektmanager (MB) übermittelt,
- daß im zugeordneten Objektmanager (MB) überprüft wird, ob eine der übermittelten logischen Objektreferenz (LOR2) entsprechende logische Objektreferenz (LOR2) im Objektmanager (MB) gespeichert ist, und
- daß bei einer gespeicherten logischen Objektreferenz (LOR2) das durch die logische Objektreferenz (LOR2) bestimmte dynamische Objekt (O2) aufgerufen und der Informationsaustausch über den zugeordneten Objektmanager (MB) veranlaßt wird.

6. Verfahren nach Anspruch 5,
**dadurch gekennzeichnet**,
daß durch ein Informationen (i) übermittelndes dynamisches Objekt (O1) für die zu übermittelnden Informationen (i) ein dynamisches Informationsobjekt (IO1) instanziiert wird, und daß bei einem Informationsaustausch von einem Informationen (i) übermittelnden zu einem durch die logische Objektreferenz (LOR2) bestimmten, dynamischen Objekt (O2) dem dem bestimmten dynamischen Objekt (O2) zugeordneten Objektmanager (MB) das dynamische Informationsobjekt (IO1) übergeben und an das durch die in der logischen Objektreferenz (LOR2) angegebene Objekt-Identifikation (oi) bestimmte dynamische Objekt (O2) übermittelt wird.

7. Verfahren nach Anspruch 5 oder 6,
**dadurch gekennzeichnet**,
daß, sofern im Objektmanager (MB) im Rahmen eines Informationsaustausches bei einer Überprüfung einer übermittelten logischen Objektreferenz (LOR2) keine entsprechende gespeicherte logische Objektreferenz (LOR2) festgestellt wird, dem die logische Objektreferenz (LOR2) übermittelnden dynamischen Objekt (O1) eine das Fehlen einer entsprechenden, gespeicherten logischen Objektreferenz (LOR2) mitgeteilt wird.

8. Verfahren nach einem der Ansprüche 5 bis 7,
**dadurch gekennzeichnet**,
daß, sofern im Objektmanager (MB) im Rahmen eines Informationsaustausches bei einer Überprüfung einer übermittelten Objektreferenz (LOR2) keine entsprechende gespeicherte Objektreferenz (LOR2) festgestellt wird, die übermittelten Informationen (i) oder das dynamische Informationsobjekt (IO1) verworfen werden.

9. Verfahren nach einem der vorhergehenden Ansprüche,
**dadurch gekennzeichnet**,
- daß die Manager- Identifikation (mi) durch eine den Speicherbereich des Objektmanagers (MA, MB) anzeigende Adreßinformation repräsentiert ist,
- daß die Objekt-Identifikation (oi) durch eine den Speicherbereich des instanziierten dynamischen Objektes (O1..3) anzeigende Adreßinformationen repräsentiert ist, und
- daß bei einem Informationsaustausch mit Hilfe der Adreßinformationen der zugeordnete Objektmanager (MA, MB) und das instanziierte, dynamische Objekt (O1..3) aufgerufen werden.

10. Verfahren nach einem der vorhergehenden Ansprüche,
**dadurch gekennzeichnet**,
daß die Einrichtung durch eine Kommunikationseinrichtung, insbesondere eine prozessorgesteuerte Telekommunikationsanlage (TK) repräsentiert ist.

## Claims

1. Method for the management of dynamic objects in a device (TK) which is programmed in an object-oriented manner in which static and dynamic objects (O1..3) can be instanced by a higher-level process or by instantiated dynamic objects (O1..3), and the dynamic objects (O1..3) can be deleted, in which case identical objects (O1..3) can be assigned to a class,
characterized
- in that each class of dynamic objects (O1..3) which comprises identical objects (O1..3) is assigned a statically instantiated object manager (MA, MB),
- in that instantiation of a dynamic object (O1..3) is initiated with the aid of the respective object manager (MA, MB), in which case a logic object reference (LOR1..3) which identifies the associated object manager (MA, MB) and the respective instantiated dynamic object (O1..3) is formed and is stored in the respective object manager (MA, MB) for each dynamic object (O1..3),
- in that deletion of a dynamic object (O1..3) is initiated with the aid of the respective object manager (MA, MB) in which case the logic object reference (LOR1..3) assigned in the respective object manager (MA, MB) is deleted, and
- in that dynamic objects (O1..3) are in each case called up via the associated object manager (MA, MB) with the aid of the logic object reference (LOR1..3).

2. Method according to Claim 1,
characterized
- in that the logic object reference (LOR1..3)
- is formed by a manager identification (mi) which determines the respective object manager (MA, MB), and
- is formed by an object identification (oi) which determines the respective object (O1..3),
- in which case, in a device (TK) using multiprocess operation, a process identification (pi) can be added to the manager and object identification (mi, oi).

3. Method according to Claim 1 or 2,
characterized
- in that, for the purpose of communication linking of a dynamic object (O1), which initiates the instantiation of a further dynamic object (O2), and of the further instantiated dynamic object (O2),
- the logic object reference (LOR2) formed during the instantiation is transmitted via the respective object manager (MB) to the dynamic object (O1) which initiates the instantiation, and
- the logic object reference (LOR1) of the dynamic object (O1) which initiates the instantiation is transmitted via the respective object manager (MB) to the further instantiated dynamic object (O2).

4. Method according to one of Claims 1 to 3,
characterized
- in that, when a dynamic object (O1..3) is intended to be deleted by another dynamic object (O1..3) or by a higher-level process, the intended deletion is reported to the dynamic object (O1..3) to be deleted, by the respective dynamic object (O1..3) or the higher-level process in the course of the information interchange, in that the dynamic object (O1..3) to be deleted reports to the associated object manager (MA, MB) in the course of a message interchange that it is to be deleted, and in that the deletion of the respective dynamic object (O1..3) is initiated by the associated object manager (MA, MB),
- in which case, when the respective dynamic object (O1..3) is deleted, the associated logic object reference (LOR1..3) which is stored in the associated object manager (MA, MB) is deleted.

5. Method according to one of Claims 2 to 5,
characterized
- in that, during any information interchange between linked dynamic objects (O1, O2), the dynamic object (O1) which initiates the information interchange transmits the logic object reference (LOR2) of the further dynamic object (O2) to the associated object manager (MB),
- in that a check is carried out in the associated object manager (MB) to determine whether a logic object reference (LOR2) corresponding to the transmitted logic object reference (LOR2) is stored in the object manager (MB), and
- in that, if a logic object reference (LOR2) is stored, the dynamic object (O2) defined by the logic object reference (LOR2) is called up, and the information interchange is initiated via the associated object manager (MB).

6. Method according to Claim 5,
characterized
in that a dynamic information object (IO1) is instantiated by a dynamic object (O1), which transmits information (i), for said information (i) to be transmitted, and
in that the dynamic information object (IO1) is transferred during an information interchange, from a dynamic object (O2) which transmits information (i) and is defined by the logic object reference (LOR2), to the object manager (MB) associated with the defined dynamic object (O2), and is transmitted to the dynamic object (O2) defined by the object identification (oi) specified in the logic object reference (LOR2).

7. Method according to Claim 5 or 6,
characterized
in that, if no corresponding stored logic object reference (LOR2) is found in the object manager (MB) in the course of an information interchange during the checking of a transmitted logic object reference (LOR2), a [lacuna] the absence of a corresponding, stored logic object reference (LOR2) is reported to the dynamic object (O1) transmitting the logic object reference (LOR2).

8. Method according to one of Claims 5 to 7,
characterized
in that, if no corresponding stored object reference (LOR2) is found in the object manager (MB) in the course of an information interchange during the checking of a transmitted object reference (LOR2), the transmitted information (i) or the dynamic information object (IO1) is rejected.

9. Method according to one of the preceding claims,
characterized
- in that the manager identification (mi) is represented by an address information item which indicates the memory area of the object manager (MA, MB),
- in that the object identification (oi) is represented by an address information item which indicates the memory area of the instantiated dynamic object (O1..3), and
- in that the associated object manager (MA, MB) and the instantiated, dynamic object (O1..3) are called up during an information interchange with the aid of the address information items.

10. Method according to one of the preceding claims, characterized
in that the device is represented by a communication device, in particular a processor-controlled telecommunications system (TK).

## Revendications

1. Procédé de gestion d'objets dynamiques dans un dispositif (TK) programmé d'une manière orientée objet, dans lequel des objets statiques et dynamiques (O1..3) peuvent être appelés par un processus d'ordre supérieur ou par des objets dynamiques (O1..3) appelés, les objets dynamiques (O1..3) pouvant être effacés, des objets (O1..3) de même nature pouvant être rangés dans une classe,
caractérisé en ce que
- un gestionnaire d'objets (MA, MB) appelé de manière statique est associé à chaque classe d'objets dynamiques (O1..3) contenant des objets (O1..3) de même nature,
- un appel d'un objet dynamique (O1..3) est lancé à l'aide du gestionnaire d'objets (MA, MB) respectif, pour chaque objet dynamique (O1..3), une référence logique d'objet (LOR1..3), qui identifie le gestionnaire d'objets (MA, MB) associé et l'objet dynamique respectif (O1..3) appelé, est formée et conservée en mémoire dans le gestionnaire d'objets respectif (MA, MB),
- l'effacement d'un objet dynamique (O1..3) est lancé à l'aide du gestionnaire d'objets (MA, MB) respectif, la référence logique d'objet (LOR1..3) associée au gestionnaire d'objets (MA, MB) respectif étant effacée, et
- des objets dynamiques (O1..3) sont à chaque fois appelés à l'aide de la référence logique d'objet (LOR1..3) par le gestionnaire d'objets (MA, MB) associé.

2. Procédé selon la revendication 1, caractérisé en ce que
- la référence logique d'objet (LOR1..3) est formée :
- d'une identification de gestionnaire (mi) qui définit le gestionnaire d'objets (MA, MB) respectif, et
- d'une identification d'objet (oi) qui définit l'objet (O1..3) respectif,
- dans le cas d'un dispositif (TK) exploité en mode multiprocessus, une identification de processus (pi) pouvant être annexée à l'identification de gestionnaire et à l'identification d'objet (mi, oi).

3. Procédé selon la revendication 1 ou 2, caractérisé en ce que
- dans le cadre de l'établissement d'une chaîne de communication entre un objet dynamique (O1) provoquant l'appel d'un autre objet dynamique (O2) et l'autre objet dynamique (O2) appelé,
- la référence logique d'objet (LOR2) formée lors de l'appel est transmise par le gestionnaire d'objets (MB) respectif à l'objet dynamique (O1) lançant l'appel, et
- la référence logique d'objet (LOR1) de l'objet dynamique (O1) lançant l'appel est transmise par le gestionnaire d'objets (MB) respectif à l'autre objet dynamique (O2) appelé.

4. Procédé selon l'une des revendications 1 à 3, caractérisé en ce que
- dans le cas de l'effacement prévu d'un objet dynamique (O1..3) par un autre objet dynamique (O1..3) ou par un processus d'ordre supérieur, l'effacement prévu est communiqué par l'objet dynamique (O1..3) respectif, resp. par le processus d'ordre supérieur dans le cadre de l'échange d'informations à l'objet dynamique (O1..3) à effacer,
- dans le cas d'un échange de message, l'objet dynamique à effacer (O1..3) indique au gestionnaire d'objets associé (MA, MB) qu'il doit être effacé, et l'effacement de l'objet dynamique (O1..3) respectif est lancé par le gestionnaire d'objets (MA, MB) associé,
- dans le cas de l'effacement de l'objet dynamique respectif (O1..3), la référence logique (LOR1..3) associée, conservée en mémoire dans le gestionnaire d'objets (MA, MB) associé, étant effacée.

5. Procédé selon l'une des revendications 2 à 5, caractérisé en ce que
- dans le cas d'un échange d'informations entre des objets dynamiques (O1, O2) reliés dans une chaîne, l'objet dynamique (O1) lançant l'échange d'informations transmet la référence logique d'objet (LOR2) de l'autre objet dynamique (O2) au gestionnaire d'objets (MB) associé,
- dans le gestionnaire d'objets (MB) associé a lieu la vérification de la présence, dans le gestionnaire d'objets (MB), d'une référence logique d'objet (LOR2) correspondant à la référence logique d'objet (LOR2) transmise, et
- dans le cas où la référence logique d'objet (LOR2) est conservée en mémoire, l'objet dynamique (O2) défini par la référence logique d'objet (LOR2) est appelé, et l'échange d'informations est lancé par le gestionnaire d'objets (MB) associé.

6. Procédé selon la revendication 5, caractérisé en ce que, pour les informations (i) à transmettre par un objet dynamique (O1) transmettant une information (i), un objet dynamique d'informations (IO1) est appelé, et dans le cas d'un échange d'informations d'un objet dynamique (O1) transmettant des informations (i) vers un objet dynamique (O2) défini par la référence logique d'objet (LOR2), l'objet dynamique d'informations (IO1) est transmis au gestionnaire d'objets (MB) associé à l'objet dynamique (O2) défini et est communiqué à l'objet dynamique (O2) défini par l'identification d'objet (oi) reprise dans la référence logique d'objet (LOR2).

7. Procédé selon la revendication 5 ou 6, caractérisé en ce que
- dans le cadre d'un échange d'informations, dans la mesure où, dans le gestionnaire d'objets (MB), il est constaté lors d'une vérification d'une référence logique d'objet (LOR2) transmise qu'il n'existe pas de référence logique d'objet (LOR2) correspondante en mémoire, une information d'erreur indiquant l'absence d'une référence logique d'objet (LOR2) correspondante en mémoire est communiquée à l'objet dynamique (O1) transmettant la référence logique d'objet (LOR2).

8. Procédé selon l'une des revendications 5 à 7, caractérisé en ce que
- dans le cadre d'un échange d'informations, dans la mesure où, dans le gestionnaire d'objets (MB), il est constaté lors d'une vérification d'une référence d'objet (LOR2) transmise qu'il n'existe pas de référence d'objet (LOR2) correspondante en mémoire, les informations (i) transmises ou l'objet dynamique d'informations (IO1) sont rejetés.

9. Procédé selon l'une des revendications précédentes, caractérisé en ce que
- l'identification de gestionnaire (mi) est représentée par une information d'adresse désignant une zone de mémoire du gestionnaire d'objets (MA, MB),
- l'identification d'objet (oi) est représentée par une information d'adresse désignant une zone de mémoire de l'objet dynamique (O1..3) appelé, et
- dans le cas d'un échange d'informations, le gestionnaire d'objets (MA, MB) associé et l'objet dynamique (O1..3) appelé sont appelés à l'aide des informations d'adresse.

10. Procédé selon l'une des revendications précédentes, caractérisé en ce que le dispositif est représenté par une installation de communication, en particulier une installation de télécommunication (TK) commandée par processeur.
